# EUROPEAN PATENT APPLICATION

(11) **EP 4 840 570 A1**
(43) Date of publication of application: **18.11.2026**
(21) Application number: 26166547.5
(22) Date of filing: 20.03.2026
(51) Int. Cl.: B23K 9/10

(54) **WELDING INTERFACE SYSTEMS AND APPARATUSES**

(30) Priority: 30.04.2025 US 202563797641 P; 10.03.2026 US 202619562354
(71) Applicant: Illinois Tool Works Inc., Glenview IL 60025 (US)
(72) Inventor: MUSKE, Mitchell James, 60025 Glenview (US)
(74) Representative: HGF

(57) **Abstract**

A welding interface system comprises: a selection interface defining a detent and a plurality of selectable angular positions, each selectable angular position of the plurality of selectable angular positions corresponding to a respective input value; a knob having a knob axis and a knob body extending from the selection interface along the knob axis, wherein the knob body is configured to rotate about the knob axis to each selectable angular position of the plurality of selectable angular positions; and a detent tab extending in a radial direction relative to the knob axis, wherein the detent tab is biased in the radial direction to selectively engage the detent based on a selected angular position of the plurality of selectable angular positions of the knob body.

## Description

### RELATED APPLICATIONS

The present application claims the benefit of U.S. Patent Application Serial No. 63/797,641, filed April 30, 2025, entitled "Welding Interface Systems and Apparatuses." The entirety of U.S. Patent Application Serial No. 63/797,641 is expressly incorporated herein by reference.

### FIELD OF THE DISCLOSURE

This disclosure relates generally to welding interface systems and apparatuses and, more particularly, to welding interface systems and apparatuses for selecting, indicating, and/or receiving one or more input values in a welding system and methods for manufacturing the same.

### BACKGROUND

Welding operations generally require one or more user inputs (e.g., voltage, current, wire feed speed, etc.). Accordingly, some welding systems use one or more mechanical user interfaces to enable a user of the welding system to provide one or more user inputs for controlling one or more aspects of the welding system.

### SUMMARY

Welding interface systems and apparatuses and methods for manufacturing the same are disclosed, substantially as illustrated by and described in connection with at least one of the figures, as set forth more completely in the claims.

### BRIEF DESCRIPTION OF THE DRAWINGS

FIG. 1 illustrates a block diagram of an example welding-type system, in accordance with aspects of this disclosure;
FIG. 2A illustrates an example of an interface system having a first example selector having a knob and a second example selector having a knob and detent tab removed to expose a selection interface and shaft, in accordance with aspects of this disclosure;
FIG. 2B illustrates an example selection interface and an example detent insert of an example selector, in accordance with aspects of this disclosure;
FIG. 3 illustrates an example detent insert having a detent tab, a detent tab mount, and a bow-shaped coupler coupling the detent tab to the detent tab mount, in accordance with aspects of this disclosure;
FIG. 4 illustrates an example knob, in accordance with aspects of this disclosure;
FIG. 5 illustrates an exploded view of an example selector having an example shaft, an example detent insert, and an example knob, in accordance with aspects of this disclosure;
FIG. 6A illustrates an example detent insert having a detent tab, a detent tab mount, and a compliant spring coupling the detent tab to the detent tab mount, in accordance with aspects of this disclosure; and
FIG. 6B illustrates an example detent insert having a detent tab, a detent tab mount, and a lever coupling the detent tab to the detent tab mount, in accordance with aspects of this disclosure.

The figures and/or components and/or aspects thereof are not necessarily drawn to scale. Where appropriate, similar or identical reference numbers are used to refer to similar or identical components.

### DETAILED DESCRIPTION

A detent can be utilized to lock a position of a device (e.g., a knob of a welding interface) at a particular position (e.g., on an interface defining a plurality of values) when engaged to, e.g., prevent the device from changing positions without an increased amount of force or other particular mechanical engagement (e.g., pressing the knob toward the interface). For example, when a user uses a knob used for selecting a welding parameter (e.g., wire feed speed) to select a predetermined or automatically controlled welding mode (e.g., automatic wire feed speed adjustment based on one or more welding parameters), it may be desirable that the knob have an increased resistance, e.g., to reduce the likelihood of the knob being moved from the selected position associated with the welding mode. However, mechanisms for engaging detents may require particularized machining (e.g., and, thereby, be costly to produce), be compatible only with a limited range of devices (e.g., and, thereby, be difficult for a user to replace), and wear over time (e.g., and, thereby, be less effective or ineffective at engaging detents).

Disclosed example detent tabs are coupled to detent inserts, shafts, and/or knobs (or other selection devices) of a selection interface and are used to lock the knob or other selection device in a predetermined position. Disclosed example detent tabs and detent inserts may be formed from a polymer and/or one or more elastic and/or semi-elastic materials and using processes such as injection molding, extrusion, and/or 3D printing. Accordingly, some disclosed example detent tabs and detent inserts may be inexpensive to produce, e.g., due to a low cost of materials forming the detent tab or detent insert. Some disclosed example detent tabs and detent inserts may be readily adaptable, e.g., by modifying a design file used for 3D printing the detent tab, the detent insert, and/or a mold for producing the detent tab and/or the detent insert to account for differing shapes, sizes, and/or engagement features (e.g., ribs and/or other corresponding or nesting components). Some disclosed example detent tabs and detent inserts may be readily adaptable are readily manufactured at a manufacturing site (e.g., by 3D printing a new mold, detent tab, or detent insert) and/or by a user themselves manufacturing the detent tab and/or detent insert (e.g., via 3D printing). Accordingly, once worn down after extensive use, a user may readily replace disclosed example detent tabs and/or detent inserts by manufacturing the detent tab and/or detent insert themselves or by reducing an amount of time used by a manufacturer to replace the detent tab and/or the detent insert.

Disclosed example detent inserts and/or detent tabs engage with a shaft, knob, and/or other selection device using one or more engagement features configured to engage the shaft, knob, and/or other selection device to rotationally couple movement of the shaft, knob, and/or other selection device with the detent tab. Accordingly, the one or more engagement features may be particularly designed to conform with a particular shape and/or one or more particular engagement features of a particular shaft, knob, and/or other selection device. Accordingly, disclosed example detent inserts and/or detent tabs may be configured (e.g., by changing a shape, size, and/or orientation of the detent tab mount or the detent tab) to work with a broad range of shafts, knobs, and/or other selection device.

Disclosed example detent inserts and/or detent tabs may reduce negative effects experienced by a user and/or a manufacturer due to wear (e.g., through long term use) of the detent insert and/or detent tab. For example, a user may replace disclosed example detent tabs and/or detent inserts and/or manufacture new disclosed example detent tabs and/or detent inserts (e.g., to account for a change in design of a shaft, knob, and/or other selection mechanism) themselves by, e.g., 3D printing the detent tab and/or detent insert. As another example, by reducing a manufacturing cost of disclosed example detent tabs and/or detent inserts, a user and/or manufacturer may experience lower replacement costs and/or replacement times associated with replacing disclosed example detent tabs and/or detent inserts. Furthermore, the ease of redesigning disclosed example detent inserts and/or detent tabs may enable a manufacturer and/or user to more quickly and easily manufacture new detent tabs and/or detent inserts to accommodate changes in design, e.g., to a shaft, a knob, and/or another selection mechanism. Further still, disclosed example detent inserts and/or detent tabs may experience less wear (e.g., have a greater number of uses before failure) than, e.g., prior art ball spring detents.

Disclosed example welding interface systems comprise: a selection interface defining a detent and a plurality of selectable angular positions, each selectable angular position of the plurality of selectable angular positions corresponding to a respective input value; a knob having a knob axis and a knob body extending from the selection interface along the knob axis, wherein the knob body is configured to rotate about the knob axis to each selectable angular position of the plurality of selectable angular positions; and a detent tab extending in a radial direction relative to the knob axis, wherein the detent tab is biased in the radial direction to selectively engage the detent based on a selected angular position of the plurality of selectable angular positions of the knob body.

In some example welding interface systems, the welding interface system further comprises a bow-shaped coupling, wherein the bow-shaped coupling couples the detent tab and the knob body. In some such example welding interface systems, the welding interface system further comprises a detent tab mount, wherein: the bow-shaped coupling extends at least partially about a circumference of the detent tab mount and couples the detent tab to the detent tab mount; and the detent tab mount couples the bow-shaped coupling and the knob body. In some such example welding interface systems, the bow-shaped coupling comprises a first arm and a second arm, each of the first arm and the second arm comprising a first end coupled to the detent tab and a second end coupled to the detent tab mount. In some such example welding interface systems, the first arm extends from the first end of the first arm to the second end of the first arm in a first circumferential direction about the knob axis; the second arm extends from the first end of the second arm to the second end of the second arm in a second circumferential direction about the knob axis; and the first circumferential direction is opposite the second circumferential direction.

In some example welding interface systems, the welding interface system further comprises a coupling mechanism coupling the detent tab and the knob body, wherein the coupling mechanism comprises at least one of a lever or a compliant spring.

In some example welding interface systems, the welding interface system further comprises a plurality of detents, wherein: the detent is a first detent of the plurality of detents; the plurality of selectable angular positions comprises a first angular position and a second angular position; the first detent corresponds to the first angular position; and the plurality of detents comprises a second detent corresponding to the second angular position. In some such example welding interface systems, the welding interface system further comprises a detent insert configured to couple to the knob body and position the detent tab based on rotation of the knob body about the knob axis, wherein: the detent insert comprises the detent tab and a detent tab mount coupled to the detent tab; one or more knob interior surfaces of the knob body define a knob receiving area; and the detent tab mount is configured to be inserted into the knob receiving area and to engage the knob body.

In some example welding interface systems, the one or more knob interior surfaces comprise one or more knob engagement features; and the detent tab mount comprises one or more detent tab mount engagement features configured to: engage at least one of the one or more knob engagement features via the rotation of the knob body about the knob axis; and nest with one or more of the one or more knob engagement features when the detent tab mount is inserted into the knob receiving area.

In some example welding interface systems, the welding interface system further comprises a detent insert, wherein: the knob body is configured to receive a shaft along the knob axis; the detent insert comprises the detent tab and a detent tab mount coupled to the detent tab; the detent insert is configured to couple to the shaft and position the detent tab based on rotation of the shaft about the knob axis; and the detent tab mount is configured to receive the shaft and to engage the shaft via rotation of the shaft.

In some example welding interface systems, the knob body and the detent tab are monolithically formed.

Disclosed example welding systems comprise: a wire feeder configured to advance an electrode and comprising a welding interface system, wherein the welding interface system comprises: a selection interface defining a detent and a plurality of selectable angular positions, each selectable angular position of the plurality of selectable angular positions corresponding to a respective input value; a knob body having a knob axis and extending from the selection interface along the knob axis, wherein the knob body is configured to rotate about the knob axis to each selectable angular position of the plurality of selectable angular positions; and a detent tab extending in a radial direction relative to the knob axis, wherein the detent tab is biased in the radial direction to selectively engage the detent based on a selected angular position of the plurality of selectable angular positions of the knob body; and control circuitry electrically coupled to the welding interface system and configured to: determine a target wire feed speed based on a selected input value corresponding to the selected angular position; and control the wire feeder to advance the electrode according to the target wire feed speed.

In some example welding systems, the respective input value corresponding to each selectable angular position of the plurality of selectable angular positions corresponds to at least one of: an operating mode input; or one or more respective wire feed speed inputs.

In some example welding systems, the welding interface system further comprises a bow-shaped coupling, wherein the bow-shaped coupling couples the detent tab and the knob body.

In some example welding systems, the welding interface system further comprises a compliant spring, wherein the compliant spring couples the detent tab and the knob body.

In some example welding systems, the welding interface system further comprises a bow-shaped coupling, wherein the bow-shaped coupling couples the detent tab and the knob body. In some such example welding systems, the welding interface system further comprises a detent tab mount, wherein: the bow-shaped coupling extends at least partially about a circumference of the detent tab mount and couples the detent tab to the detent tab mount; and the detent tab mount couples the bow-shaped coupling and the knob body. In some such example welding systems, the bow-shaped coupling comprises a first arm and a second arm, each of the first arm and the second arm comprising a first end coupled to the detent tab and a second end coupled to the detent tab mount. In some such example welding systems, the first arm extends from the first end of the first arm to the second end of the first arm in a first circumferential direction about the knob axis; the second arm extends from the first end of the second arm to the second end of the second arm in a second circumferential direction about the knob axis; and the first circumferential direction is opposite the second circumferential direction.

In some example welding systems, the welding interface system further comprises a coupling mechanism coupling the detent tab and the knob body, wherein the coupling mechanism comprises at least one of a lever or a compliant spring.

In some example welding systems, the welding interface system further comprises a plurality of detents, wherein: the detent is a first detent of the plurality of detents; the plurality of selectable angular positions comprises a first angular position and a second angular position; the first detent corresponds to the first angular position; and the plurality of detents comprises a second detent corresponding to the second angular position. In some such example welding systems, the welding interface system further comprises a detent insert configured to couple to the knob body and position the detent tab based on rotation of the knob body about the knob axis, wherein: the detent insert comprises the detent tab and a detent tab mount coupled to the detent tab; one or more knob interior surfaces of the knob body define a knob receiving area; and the detent tab mount is configured to be inserted into the knob receiving area and to engage the knob body.

In some example welding systems, the one or more knob interior surfaces comprise one or more knob engagement features; and the detent tab mount comprises one or more detent tab mount engagement features configured to: engage at least one of the one or more knob engagement features via the rotation of the knob body about the knob axis; and nest with one or more of the one or more knob engagement features when the detent tab mount is inserted into the knob receiving area.

In some example welding systems, the welding interface system further comprises a detent insert, wherein: the knob body is configured to receive a shaft along the knob axis; the detent insert comprises the detent tab and a detent tab mount coupled to the detent tab; the detent insert is configured to couple to the shaft and position the detent tab based on rotation of the shaft about the knob axis; and the detent tab mount is configured to receive the shaft and to engage the shaft via rotation of the shaft.

In some example welding systems, the knob body and the detent tab are monolithically formed.

Disclosed example welding systems comprise: power conversion circuitry configured to convert input power to welding power and to output the welding power to an electrode, wherein the power conversion circuitry comprises a welding interface system comprising: a selection interface defining a detent and a plurality of selectable angular positions, each selectable angular position of the plurality of selectable angular positions corresponding to a respective input value; a knob having a knob axis and a knob body extending from the selection interface along the knob axis, wherein the knob body is configured to rotate about the knob axis to each selectable angular position of the plurality of selectable angular positions; and a detent tab extending in a radial direction relative to the knob axis, wherein the detent tab is biased in the radial direction to selectively engage the detent based on a selected angular position of the plurality of selectable angular positions of the knob body; and control circuitry electrically coupled to the welding interface system and configured to: determine one or more target welding parameters based on a selected input value corresponding to the selected angular position; and control the power conversion circuitry to output the welding power according to the one or more target welding parameters.

In some example welding systems, the respective input value corresponding to each selectable angular position of the plurality of selectable angular positions corresponds to at least one of a respective welding parameter input. In some such example welding systems, the respective welding parameter input corresponding to each selectable angular position of the plurality of selectable angular positions comprises at least one of: a voltage input; a current input; a power input; a resistance input; an enthalpy input; a wire feed speed input; a gas flow rate input; a pulse rate input; an arc length input; a welding process input; a welding mode input; or an operating mode input.

In some example welding systems, the welding interface system further comprises a bow-shaped coupling, wherein the bow-shaped coupling couples the detent tab and the knob body.

In some example welding systems, the welding interface system further comprises a bow-shaped coupling, wherein the bow-shaped coupling couples the detent tab and the knob body. In some such example welding systems, the welding interface system further comprises a detent tab mount, wherein: the bow-shaped coupling extends at least partially about a circumference of the detent tab mount and couples the detent tab to the detent tab mount; and the detent tab mount couples the bow-shaped coupling and the knob body. In some such example welding systems, the bow-shaped coupling comprises a first arm and a second arm, each of the first arm and the second arm comprising a first end coupled to the detent tab and a second end coupled to the detent tab mount. In some such example welding systems, the first arm extends from the first end of the first arm to the second end of the first arm in a first circumferential direction about the knob axis; the second arm extends from the first end of the second arm to the second end of the second arm in a second circumferential direction about the knob axis; and the first circumferential direction is opposite the second circumferential direction.

In some example welding systems, the welding interface system further comprises a coupling mechanism coupling the detent tab and the knob body, wherein the coupling mechanism comprises at least one of a lever or a compliant spring.

In some example welding systems, the welding interface system further comprises a plurality of detents, wherein: the detent is a first detent of the plurality of detents; the plurality of selectable angular positions comprises a first angular position and a second angular position; the first detent corresponds to the first angular position; and the plurality of detents comprises a second detent corresponding to the second angular position. In some such example welding systems, the welding interface system further comprises a detent insert configured to couple to the knob body and position the detent tab based on rotation of the knob body about the knob axis, wherein: the detent insert comprises the detent tab and a detent tab mount coupled to the detent tab; one or more knob interior surfaces of the knob body define a knob receiving area; and the detent tab mount is configured to be inserted into the knob receiving area and to engage the knob body.

In some example welding systems, the one or more knob interior surfaces comprise one or more knob engagement features; and the detent tab mount comprises one or more detent tab mount engagement features configured to: engage at least one of the one or more knob engagement features via the rotation of the knob body about the knob axis; and nest with one or more of the one or more knob engagement features when the detent tab mount is inserted into the knob receiving area.

In some example welding systems, the welding interface system further comprises a detent insert, wherein: the knob body is configured to receive a shaft along the knob axis; the detent insert comprises the detent tab and a detent tab mount coupled to the detent tab; the detent insert is configured to couple to the shaft and position the detent tab based on rotation of the shaft about the knob axis; and the detent tab mount is configured to receive the shaft and to engage the shaft via rotation of the shaft.

In some example welding systems, the knob body and the detent tab are monolithically formed.

In some example welding systems, the welding interface system further comprises a compliant spring, wherein the compliant spring couples the detent tab and the knob body.

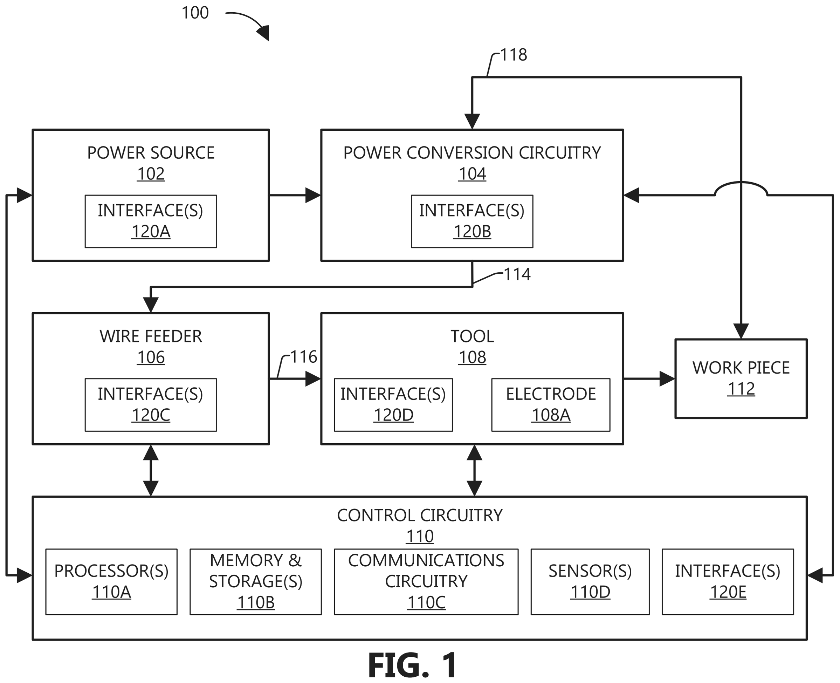

FIG. 1 is a block diagram of an example of a welding system 100 having a power conversion circuitry 104, a wire feeder 106, a tool 108, and control circuitry 110. The welding system 100 powers, controls, and supplies consumables (e.g., an electrode) to a welding application. In some examples, the power supply 102 directly supplies input power to the tool 108. The tool 108 may be a welding torch configured for one or more welding modes, such as any, some, or all of gas-metal arc welding ("GMAW") (also referred to as metal inert gas welding ("MIG")), pulsed gas-metal arc welding ("GMAW-P") (also referred to as "pulsed MIG"), current-controlled welding, voltage-controlled welding, enthalpy-controlled welding, power-controlled welding, resistance-controlled welding, pulse welding, tungsten inert gas ("TIG") (also referred to as gas tungsten arc welding ("GTAW")), flux cored arc welding ("FCAW"), shielded metal arc welding ("SMAW") (also referred to as "stick welding"), plasma cutting, plasma welding, spray welding, short circuit transfer welding, pulsed spray welding, and/or one or more other welding modes based on the desired welding application.

In the example illustrated in FIG. 1, the power conversion circuitry 104 is configured to supply welding power to the wire feeder 106, and the wire feeder 106 is configured to route the welding power to the tool 108. In some examples, the wire feeder 106 advances an electrode 108A (e.g., welding wire) to the tool 108, and the tool 108 may provide the welding power to the electrode 108A, e.g., to create and/or maintain a welding arc between the electrode 108A and a workpiece 112. In the example of FIG. 1, the welding power flows from the power conversion circuitry 104 through a power cable 114 to the wire feeder 106 and from the wire feeder 106 through a torch cable 116 to the tool 108. In some examples, either or both of the cables 114, 116 may be used to transmit and/or receive data communications between any, some, or all of the power conversion circuitry 104, the wire feeder 106, the tool 108, and control circuitry 110. In some examples, the power conversion circuitry 104 is configured to supply welding power directly to the tool 108 and/or the electrode 108A instead of and/or in addition to the wire feeder 106. Accordingly, the power conversion circuitry 104 may output welding power directly to the electrode 108A (e.g., via a cable coupling the power conversion circuitry 104 to the tool 108) and/or indirectly to the electrode 108A (e.g., via the power cable 114). In addition to supplying welding power and/or the electrode 108A to the tool 108, the wire feeder 106 may supply a filler metal to the tool 108 for various welding applications (e.g., GMAW). While example of the welding system 100 depicted in FIG. 1 includes the wire feeder 106 (e.g., for GMAW operations), the wire feeder 106 may be replaced by any other type of remote accessory device, such as a stick welding and/or TIG welding remote control interface that provides stick and/or TIG welding.

The power conversion circuitry 104 receives input power from a power source 102 (e.g., an engine, an electric motor, a generator, an AC power grid, a battery, one or more other energy-generating or -storage devices, and/or any combination thereof), conditions the input power, and provides an output power to one or more welding devices in accordance with, e.g., demands of the welding system 100, one or more input values, and/or one or more welding parameters. The power source 102 may be supplied from an offsite location (e.g., the input power may originate from the power grid). The power conversion circuitry 104 may include transformers, rectifiers, switches, and so forth, capable of converting the AC input power to AC and/or DC output power as dictated by demands of the welding system 100, one or more input values, one or more welding parameters, one or more aspects of the input power (e.g., frequency, voltage, current, etc.), etc.

The power conversion circuitry 104 can convert input power (e.g., the input power received from the power source 102 as AC power) to welding power (e.g., DC power) and output the welding power to the wire feeder 106, the tool 108, etc. For example, the power conversion circuitry 104 may output welding power to a weld circuit defined, at least in part, by the electrode 108A, the workpiece 112, and a return cable 118 coupled to the power conversion circuitry 104 and the workpiece 112. In some examples, the power conversion circuitry 104 may output welding power based on one or more target welding parameters (e.g., one target welding parameter, a plurality of target welding parameters associated with one or more respective and/or distinct time values, etc.) to control one or more corresponding welding parameters, such as a welding parameter of the welding power (e.g., a voltage, current, frequency, enthalpy, power, and/or one or more other setpoints) and/or a welding parameter of the wire feeder 106 (e.g., a wire feed speed) according to one or more input values (e.g., a target voltage, a target wire feed speed, and/or one or more other target welding parameters).

The welding system 100 includes and/or is communicatively coupled to the control circuitry 110 such that the control circuitry 110 controls operation of the power conversion circuitry 104, the wire feeder 106, the tool 108, and/or one or more other components, portions, or aspects of the system 100. The control circuitry 112 includes one or more processors 110A that control the operations of the system 100. The control circuitry 110 receives and processes multiple inputs associated with the desired and/or measured performance, demands, and/or aspects of the welding system 100. The one or more processors 110A may include one or more microprocessors, such as one or more "general-purpose" microprocessors, one or more special-purpose microprocessors and/or ASICS, and/or any other type of processing device. For example, the processor 110A may include one or more digital signal processors ("DSPs").

In the example of FIG. 1, the control circuitry 110 includes one or more memory and/or storage devices 110B (e.g., nonvolatile storage, one or more non-transitory computer-readable medium(s)) may include ROM, flash memory, a hard drive, and/or any other suitable optical, magnetic, and/or solid-state storage medium(s), a volatile memory, such as random access memory (RAM), and/or a nonvolatile memory, such as read-only memory (ROM), and/or a combination thereof). The one or more memory and/or storage devices 110B may store data (e.g., data corresponding to a welding application), instructions (e.g., software or firmware to perform welding processes), and/or any other appropriate data. The one or more memory and/or storage devices 110B may store a variety of information and may be used for various purposes. For example, the one or more memory and/or storage devices 110B may store processor executable instructions (e.g., firmware or software) for the processor 110A to execute. In addition, one or more control regimes for various welding processes, along with associated settings and parameters, may be stored in the one or more memory and/or storage devices 110B, along with code configured to provide a specific output (e.g., initiate wire feed, enable gas flow, capture welding current data, detect short circuit parameters, determine amount of spatter) during operation.

In the example of FIG. 1, the control circuitry 110 includes communications circuitry 110C. The communications circuitry 118 includes, e.g., a receiver circuit and a transmitter circuit. Generally, the receiver circuit receives data transmitted by the power source 102, the power conversion circuitry 104, wire feeder 106, the tool 108, one or more sensors 110D, etc. and the transmitter circuit transmits data to the power source 102, the power conversion circuitry 104, wire feeder 106, the tool 108, etc. In the example of FIG. 1, the control circuitry 110 includes the one or more sensors 110D and each of the one or more sensors 110D measure one or more parameters (e.g., an aspects, a quality, a state, etc.) of one or more devices, systems, components, etc. of the welding system 100 and/or of power (e.g., input power and/or welding power) received by and/or output by the welding system 100 and/or one or more devices, systems, components, etc. thereof.

Any, some, or all of the power supply 102, the power conversion circuitry 104, the wire feeder 106, and/or the tool 108 may additionally and/or alternatively include a control circuitry (e.g., the control circuitry 110 or a similar control circuitry), communications circuitry (e.g., the communications circuitry 110C or a similar control circuitry), one or more sensors (e.g., any, some, or all of the one or more sensors 110D), etc. In some examples, the control circuitry 110 is a plurality of control circuitries. In some examples, the system 100 does not include the control circuitry 110. In some examples, the control circuitry 110 includes one or more remote computers communicatively coupled to the system 100.

The control circuitry 110 controls the system 100 (e.g., the power conversion circuitry 104, the wire feeder 106, the tool 108, etc.) based on one or more input values, one or more measured values (e.g., one or more welding parameters measured by the one or more sensors 110D), and/or one or more target values (e.g., one or more target welding parameters determined by the control circuitry 110 based on one or more input values, one or more instructions, and/or one or more other control target welding parameters). One or more input values (e.g., a target wire feed speed, a target current, a target voltage, a target resistance, a target enthalpy, a target power, etc.) received by the control circuitry 110 may be determined based on or more input values selected by a user via one or more welding interface systems of the system 100 or automatically set (e.g., based on one or more welding modes selected via the one or more welding interface systems). Example welding interface systems may include a first welding interface system 120A of the power source 102, a second welding interface system 120B of the power conversion circuitry 104, a third welding interface system 120C of the wire feeder 106, a fourth welding interface system 120D of the tool 108, a fifth welding interface systems 120E of the control circuitry 110, and/or one or more other welding interface systems.

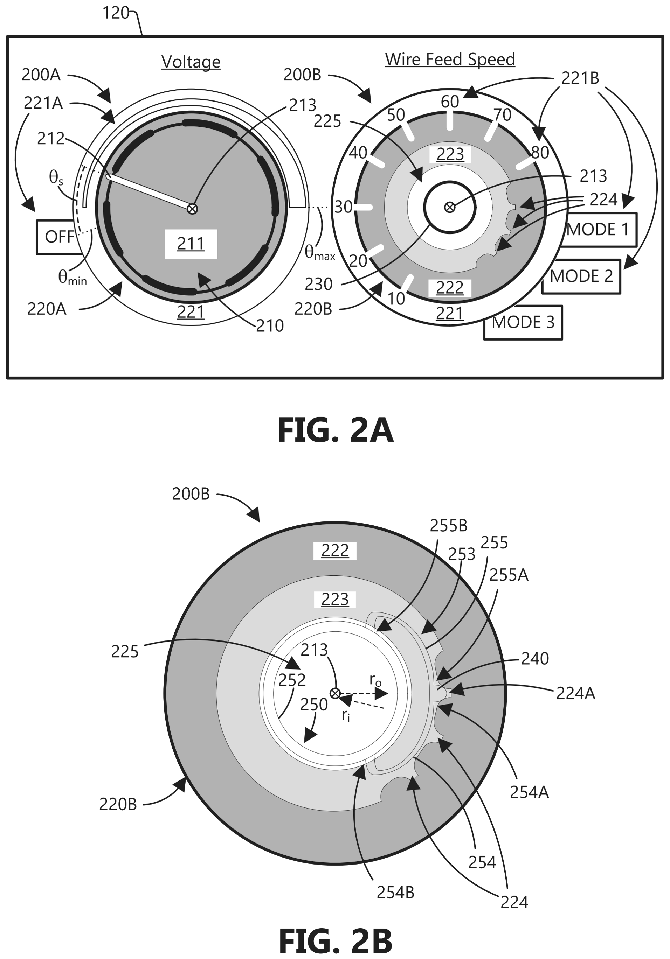

Turning now to FIG. 2A, and with reference to FIG. 1, an example of an interface system 120 (e.g., any, some, or all of the welding interface systems 120A, 120B, 120C, 120D, 120E of FIG. 1). The interface system 120 may be positioned on a surface of a device or component of the system 100. In the example of FIG. 2A, the interface system 120 includes a first selector 200A and a second selector 200B, which may be used by a user of the system 100 to select a target voltage of the welding power output by the power conversion circuitry 104 and a target wire feed speed of the wire feeder 106, respectively. In some examples, the interface system 120 and/or one or more other interface systems may have only one or any plurality of selectors. In some examples, one or more selectors of the interface system 120 may be associated with only one target welding parameter or any plurality of welding parameters.

The first selector 200A includes a first selection interface 220A having a first plurality of input values 221A and the second selector 200B includes a second selection interface 220B (e.g., a surface) having a second plurality of input values 221B. Each of the selectors 200A, 200B also include a knob 210 and a shaft 230. However, for illustrative purposes, the example of FIG. 2A depicts the knob 210 of the first selector 200A and does not depict the knob 210 of the second selector 200B, e.g., to render the shaft 230 of the second selector 200B visible (while the shaft 230 of the first selector 200A is obscured in the view of FIG. 2A by the knob 210 of the first selector 200A).

The knobs 210 of the selectors 200A, 200B are used to select a respective selected input value of each of the selectors 200A, 200B from the first plurality of input values 221A and the second plurality of input values 221B, respectively. Each of the knobs 210 define a respective knob axis 213 (e.g., an axis extending through the shaft 230), and a respective knob body 211 of each of the knobs 210 extends from a respective one of the selection interfaces 220A, 220B and along the knob axis. In the example of FIG. 2A, a user makes a selection using the selector 200A by rotating the knob body 211 of the knob 210 of the first selector 200A about the knob axis 213 to select a selectable angular position of a plurality of selectable angular positions of the selectors 200A, 200B. For example, a user of the welding interface system 120 can select a target output voltage of the power conversion circuitry 104 such that an indicator 212 of the knob 210 points (e.g., away from the knob axis 213) to define a selected angular position (θₛ) associated with a selected input value of the first plurality of input values 221A. Accordingly, the first selector 200A and/or the control circuitry 110 may determine a selected input value of the plurality of input values 221A based on the selected angular position (θₛ) of the knob 210 (e.g., as defined by the indicator 212).

The selected angular position (θₛ) is selected from a plurality of selectable angular positions. In some examples, the plurality of selectable angular positions spans 360° about the knob axis 213. In some examples, the plurality of selectable angular positions spans less than 360°. For example, the indicator 212 of the first selector 200A selects only angular positions extending clockwise about the knob axis 213 between a minimum selectable angle (θₘᵢₙ) (e.g., an angular position of the knob body 211 associated with the "OFF" mode of the first plurality of input values 221A) and a maximum selectable angle (θₘₐₓ) (e.g., an angular position associated with the largest end of the bar on the exposed surface 221 (e.g., an angular position associated with a maximum selectable voltage of the second plurality of input values 221B) of the first selector 200A. The shaft 230 and/or one or more other components of the first selector 200A and/or the welding interface system 120 limits the knob body 211 to occupying angular positions between and including the selectable angles (θₘᵢₙ, θₘₐₓ) by, e.g., including one or more engagement features blocking either or both of the shaft 230 and the knob body 211 from being rotated beyond either or both of the selectable angles (θₘᵢₙ, θₘₐₓ). In some examples, a selector does not include a knob or includes a plurality of knobs. In some examples, a selector includes a lever, a switch, a slider, and/or one or more other selection mechanisms in addition to and/or alternatively to the knob 210.

The knob 210 and/or the shaft 230 of either or both of the selectors 200A, 200B may be used by one or more devices or systems (e.g., the control circuity 110) to indicate one or more selected input values (e.g., welding parameter values and/or welding modes). A device or system (e.g., the control circuitry 110) may determine an input value based on an angular position of the knob 210 and/or the shaft 230, as indicated by one or more signals received by the device or system and generated by, e.g., one or more potentiometers, one or more encoders, one or more sensors, and/or one or more other devices configured to directly or indirectly determine or indicate an angular position of the knob 210 and/or the shaft 230.

In the example of FIG. 2A, the first selector 200A is used to select a target voltage of the power conversion circuitry 104 (e.g., a desired output voltage of the welding power output by the power conversion circuitry 104), and the second selector 200B is used to select a target wire feed speed of the wire feeder 106. In the example of FIG. 2A, voltage input values of the first plurality of input values 221A are represented on an exposed interface surface 221 of the first selection interface 220A by a circumferential bar of increasing width (e.g., painted, etched, and/or printed on the exposed interface surface 221), and wire feed speed input values of the second plurality of input values 221B are represented by a plurality of notches and associated values on the exposed interface surface 221 of the second selection interface 220B (e.g., painted, etched, and/or printed on the exposed interface surface 221).

Additionally, each of the pluralities of input values 221A, 221B include one or more operating modes. For example, the first plurality of input values 221A include an "OFF" mode represented by a text block depicted on the exposed interface surface 221 of the first selection interface 220A (e.g., painted, etched, and/or printed on the exposed interface surface 221), and a user of the system 100 may turn off the power conversion circuitry 104 (e.g., control the power conversion circuitry 104 to cease outputting the welding power) by turning the indicator 212 to point to the "OFF" mode text block (e.g., the angular position of the plurality of selectable angular positions associated with the "OFF" mode). The second plurality of input values 221B also includes a plurality of selectable operating modes (e.g., predetermined target welding parameters, settings, control loops, etc.) indicated by a plurality of text blocks (e.g., painted, etched, and/or printed on the exposed interface surface 221), including a "MODE 1," a "MODE 2," and a "MODE 3" depicted on the exposed interface surface 221 of the second selection interface 220B. By turning the knob 210 of the second selector 200B to a selected angular position associated with an operating mode, the operating mode may be selected from the second plurality of input values 221B.

Each operating mode of the second plurality of input values 221B, e.g., control a wire feed speed of the wire feeder 106 according to one or more predetermined target wire feed speeds, control loops, etc. In some examples, a plurality of input values of a selector may include one or more target welding parameter values and/or one or more operating modes. In some examples, any, some, or all input values of a selector may be represented by one or more representations (e.g., painted, carved, printed, etc. onto and/or into the selection interface) comprising one or more bars, one or more text blocks, one or more notches, and/or one or more other mechanisms.

Each of the selection interfaces 220A, 220B includes an outer interface surface 222 and an inner interface surface 223. In the example of FIG. 2A, the outer interface surface 222 is a surface extending radially inward from the exposed interface surface 221 toward the knob axis 213, and the outer interface surface 222 is recessed from the exposed interface surface 221 (e.g., along and/or relative to the knob axis 213). In some examples, the outer interface surface 222 is raised from the exposed interface surface 221 (e.g., along and/or relative to the knob axis 213). In some examples, the surfaces 221, 222 are the same surface.

The inner interface surface 223 is a surface extending radially inwardly from the outer interface surface 222 toward the knob axis 213 until terminating to define a gap 225 (e.g., about and/or extending along the knob axis 213) for receiving the shaft 230. Accordingly, the shaft 230 extends along or parallel to the knob axis 213 within and/or through the gap 225. In the example of FIG. 2A, the inner interface surface 223 is recessed from the outer interface surface 222 (e.g., along and/or relative to the knob axis 213) to define a plurality of detents 224, e.g., such that each detent of the plurality of detents 224 are defined by a portion of the inner interface surface 223 extending outwardly from the knob axis 213 between two portions of the outer interface surface 222 extending inwardly toward the knob axis 213. In some examples, the inner interface surface 223 may be raised (e.g., along and/or relative to the knob axis 213) from the outer interface surface 222 to define a plurality of detents, e.g., such that each detent of the plurality of detents 224 are defined by a portion of the outer interface surface 222 extending inwardly toward the knob axis 213 between two portions of the inner interface surface 223 extending outwardly from the knob axis 213. In some examples, any, some, or all of the surfaces 221, 222, 223 may be defined by only one surface and/or any plurality of surfaces.

Each detent of the plurality of detents 224 of the second selection interface 220B corresponds to a respective operating mode of the three operating modes of the second plurality of input values 221B, and each detent may, thereby, be used to retain a position of the knob 210 (e.g., increase and/or modify a magnitude and/or direction of force required to modify the selected angular position (θₛ)) when the selected input value is the operating mode of the second plurality of input values (e.g., "MODE 1") associated with the detent. Accordingly, the selector 200B includes a mechanism for engaging each of the detents 224.

Turning now to FIG. 2B, and with reference to FIG. 2A, an example of the selector 200B of FIG. 2A is depicted in a closer view in FIG. 2B and as including a detent tab 240, while the exposed interface surface 221 and the shaft 230 (depicted in FIG. 2A), are omitted for illustrative purposes. The detent tab 240 extending in a radial direction relative to the knob axis 213 above and/or on top of (e.g., along and/or parallel to the knob axis 213) the inner interface surface 223, and the detent tab 240 is biased in the radial direction to selectively engage the plurality of detents 224 based on a selected angular position of the plurality of selectable angular positions of the second selector 200B (e.g., an angular range spanning clockwise about the exposed surface 221 of the second selection interface 220B from the "10" notch to the "MODE 3" text block).

In the example of FIG. 2B, the detent tab 240 is biased in an outward radial direction (rₒ) away from the knob axis 213. Accordingly, when the detent tab 240 is angled (e.g., relative to the knob axis 213) as depicted in FIG. 2B, the detent tab 240 is biased in the outward radial direction (rₒ) and into a first detent 224A of the plurality of detents 224. By being biased into the first detent 224A, the detent tab 240 causes the detent tab 240 to resist rotation about the knob axis 213. In some examples, the detent tab 240 may be biased in a direction alternative to the outward radial direction (rₒ). For example, in some embodiments, the inner interface surface 223 is raised along the knob axis 213 relative to the outer interface surface 222 such that the inner interior surface 223 defines detents which extend radially inwardly toward the knob axis 213, and the detent tab 240 is biased in an inward radial direction (rᵢ) toward the knob axis 213 to engage such detents.

In the example of FIG. 2B, the detent tab 240 is coupled to the knob body 211 of the knob 210 such that rotation of the knob body 211 about the knob axis 213 (e.g., from a first angular position to a second angular position of the plurality of selectable angular positions of the second selector 200B) rotates the detent tab 240 about the knob axis 213. In the example of FIG. 2B, the detent tab 240 is a component of a detent insert 250 and is directly coupled to (e.g., monolithically formed with) a detent mount 252 such that rotation of the knob body 211 about the knob axis 213 engages and, thereby, rotates the detent tab mount 252 about the knob axis 213 which, in turn, rotates the detent tab 240 about the knob axis 213. In some examples, rather than being coupled to the detent mount 252, the detent tab 240 is directly coupled to the knob 210 and/or the shaft 230. In some such examples, the detent tab 240 is a component of the knob 210 and/or the shaft 230, and the selector 200B may, thereby, not include the detent insert 250.

A coupling mechanism may directly couple (e.g., be monolithically formed with, lock with, and/or attach) the detent tab 240 to the detent tab mount 252, the knob 210, and/or the shaft 230. In the example of FIG. 2B, a bow-shaped coupling 243 directly couples the detent tab 240 and the detent tab mount 252, thereby coupling the detent tab 240 to the knob body 211. In the example of FIG. 2B, the bow-shaped coupling 243 both couples the detent tab 240 and the knob body 211 and biases the detent tab 240 in the outward radial direction (rₒ). The bow-shaped coupling 242 extends partially about a circumference of the detent tab mount 252. Accordingly, a first arm 244 of the bow-shaped coupling 243 is coupled to the detent tab 240 at a first end 244A of the first arm 244 and to the detent tab mount 252 at a second end 244B of the first arm 244, and a second arm 245 of the bow-shaped coupling 243 is coupled to the detent tab 240 at a first end 245A of the second arm 245 and to the detent tab mount 252 at a second end 245B of the second arm 245. Each of the arms 244, 245 extend circumferentially from the detent tab 240 to the detent mount 252 to define a bow shape, and the bow shape of the arms 244, 245 (e.g., due to a resiliency of a material of the arms 244, 245) applies to the detent tab 240 a biasing force in the outward radial direction (rₒ) when the detent tab 240 is compressed toward the knob axis 213 (e.g., in the inward radial direction (rᵢ)) and distorts the bow shape of the arms 244, 245. In some examples, the bow shape of the arms 244, 245 provides a similar biasing force if the arms 244, 245 are additionally and/or alternatively coupled to the knob body 211 and/or the shaft 230.

Accordingly, in the example of FIG. 2B, because the knob body 211 and the detent tab 240 are coupled by the bow-shaped coupling 243, and because the detent tab 240 is biased in the outward radial direction (rₒ), rotation of the knob body 211 to a selected angular position associated with "MODE 1" rotates the detent tab 240 into the first detent 224A, which is associated with the selected angular position of the knob body 211 associated with "MODE 1." The biasing of the detent tab 240 in the outward radial direction (rₒ) thereby impedes rotational movement of the knob body 211 about the knob axis 213 when the detent tab 240 is inserted into the first detent 224A. Accordingly, to turn the knob body 211, a user of the selector 200B is required to apply more rotational force to rotate the knob body 211 from the selected angular position of FIG. 2B (e.g., counter-clockwise from the first detent 224A) than an amount of rotational force required to rotate the knob body 211 between angular positions not associated with detents (e.g., between the values "10" and "80" of the second plurality of input values, as depicted on the second selection interface 220B in FIG. 2A).

The detent tab 240, the bow-shaped coupling mechanism 243, and/or one or more other coupling mechanisms coupling the detent tab 240 to any, some, or all of the detent tab mount 252, the shaft 230, and/or the knob body 211 may be formed from a material flexible enough to retain structural integrity when misshapen by insertion into a detent (e.g., the detent 224A) yet rigid enough to provide a suitable biasing force For example, the detent tab 240, the bow-shaped coupling 243, and/or one or more other coupling mechanisms coupling the detent tab 240 to any, some, or all of the detent tab mount 252, the shaft 230, and/or the knob body 211 may be formed from a polymer and/or one or more elastic and/or semi-elastic materials and using processes such as injection molding, extrusion, and/or 3D printing. Accordingly, the selector 200B is configured to provide greater freedom of rotation of the knob body 211 about the knob axis 213 when the detent tab 240 is not inserted into a detent and limited or no freedom of rotation of the knob body 211 about the knob axis 213 when the detent tab is inserted into a detent.

In some examples, the detent tab 240 is configured to be inserted into and/or removed from a detent (e.g., the detent 224A) by applying a greater amount of rotational force to the knob body 211 about the knob axis 213 than an amount of force necessary to rotate the knob body 211 when the detent tab 240 is not inserted into a detent. For example, the detent tab 240 may be configured to be inserted into and/or removed from the detent 224A by a user rotating the knob body 211 with sufficient force to overcome frictional force induced by the biasing force in the outward radial direction (rₒ) applied to the detent tab 240 and against the outer interface surface 222 caused by misshaping of the bow-shaped coupling 243 as the detent tab 240 is pushed in the inward radial direction (rᵢ) by inward radial protrusions of the outer interface surface 222 defining the detent 224A. In some examples, the detent tab 240 is configured to be inserted into and/or removed from a detent (e.g., the detent 224A) by pushing and/or pulling the knob body 211 along the knob axis 213 (e.g., towards and/or away from the surfaces 221, 222, 223) to, e.g., remove the detent tab 240 from the first detent 224A along an axis parallel to the knob axis 123 and, thereby, enable greater freedom of rotation of the knob body 211. Accordingly, in some examples, the detent tab 240 and the plurality of detents 244 are configured to be substantially planar with the detent tab 240 in a first plane perpendicular to the knob axis 213, and the knob 210, shaft 230, and/or detent insert 250 may be configured to enable movement of the detent tab 240 parallel to the knob axis 213 such that the detent tab 240 may be repositioned to a second plane perpendicular to the knob axis 213 to which the plurality of detents 224 do not extend.

Each detent of the plurality of detents may be associated with one or more angular positions of the knob body 211 and/or one or more input values. For example, each detent of the plurality of detents 224 are associated with a respective operating mode of the second plurality of input values 221B (e.g., the detent 224A corresponds to the "MODE 1" of FIG. 2A). In some examples, one or more detents may correspond to only one or any plurality of input values of a selection interface and/or only one or any plurality of angular positions of the knob body 211. In some examples, a selection interface may define only one detent or any plurality of detents.

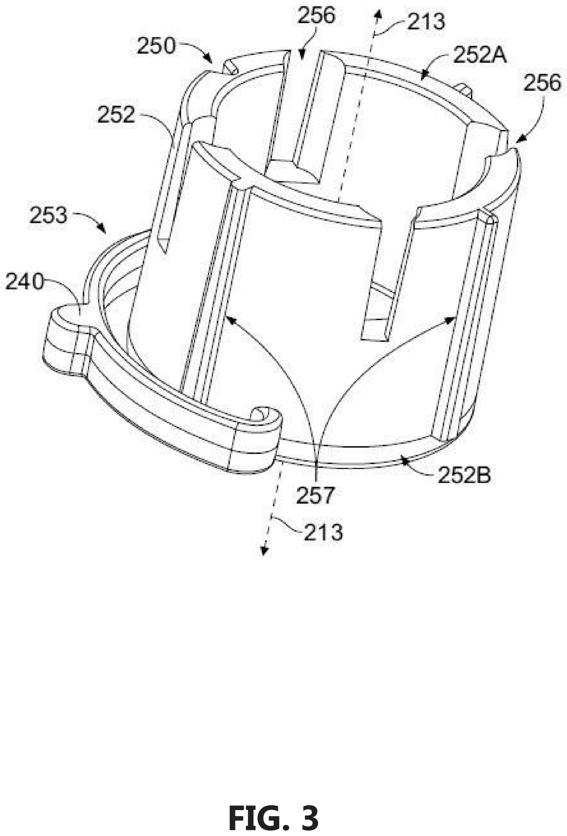

Turning now to FIG. 3, and with reference to FIGS. 2A and 2B, the detent tab mount 252 of the detent insert 250 of FIG. 2B can be seen to extend along the knob axis 213. In the embodiment of FIG. 3, the detent tab mount 252 defines a plurality of detent tab mount engagement features 246, which are configured to, when the detent insert 250 is inserted into the knob body 211 and/or onto the shaft 230, engage one or more corresponding engagement features of the knob body 211 and/or the shaft 230 such that rotation of the knob body 211 and/or the shaft 230 about the knob axis 213 causes the detent tab mount 252 and, thereby, the detent tab 240 to similarly rotate about the knob axis 213.

In the embodiment of FIG. 3, the detent tab mount 252 also defines a plurality of detent tab mount alignment features 247, which are configured to inhibit or prevent the detent tab mount 252 from being inserted into the knob body 211 and/or onto the shaft 230 when the detent tab mount 252 is not oriented at an angular position relative to the knob axis 213 that corresponds to an angular position of the knob body 211 and/or the shaft 230 relative to the knob axis 213. For example, the plurality of detent tab mount alignment features 247 may engage with one or more corresponding alignment features of the knob body 211 if a user attempts to insert the detent tab mount 252 into the knob body 211 at relative angular positions which would prevent the detent tab 240 from being positioned in the detent 224A (as depicted in FIG. 2B) when the indicator 212 of the knob 210 is pointed at the "MODE 1" text block of the second selection interface 220B (as depicted in FIG. 2A).

In the embodiment of FIG. 3, each of the detent tab mount engagement features 246 and each of the detent tab mount alignment features 257 extend from a first end 252A of the detent tab mount 252 and toward a second end 252B of the detent tab mount 252. Accordingly, in some examples, the first end 252A is configured to be inserted into the knob body 211 in a direction along the knob axis 213 away from the surfaces 221, 222, 223 (e.g., such that the features 246, 247 interact with one or more corresponding features of the knob body 211) and/or about the shaft 230 in a direction along the knob axis 213 toward the surfaces 221, 222, 223 (e.g., such that the features 246, 247 interact with one or more corresponding features of the shaft 230). In some examples, any, some, or all of the detent tab mount alignment features 247 may be positioned on an interior side of the detent tab mount 252, e.g., to engage the shaft 230. In some examples, the detent tab mount 252 includes one, none, or any plurality of any, some, or all of the engagement features 246, 247.

In the embodiments of FIGS. 2B and 3, the detent tab mount 252 is coupled to only one detent tab. In some examples, the detent tab mount 252 is coupled to any plurality of detent tabs. In some examples, the detent insert 250 and/or one or more other detent inserts described herein are used in combination with another detent insert or any plurality of detent inserts. In the embodiment of FIG. 3, the detent tab 240 is coupled by the bow-shaped coupler 253 to the second end 252B of the detent tab mount 252. In some embodiments, the detent tab 240 is coupled to the first end 252A of the detent tab mount 252 and/or along all or a portion of a length of the detent tab mount 252 between the first end 252A and the second end 252B.

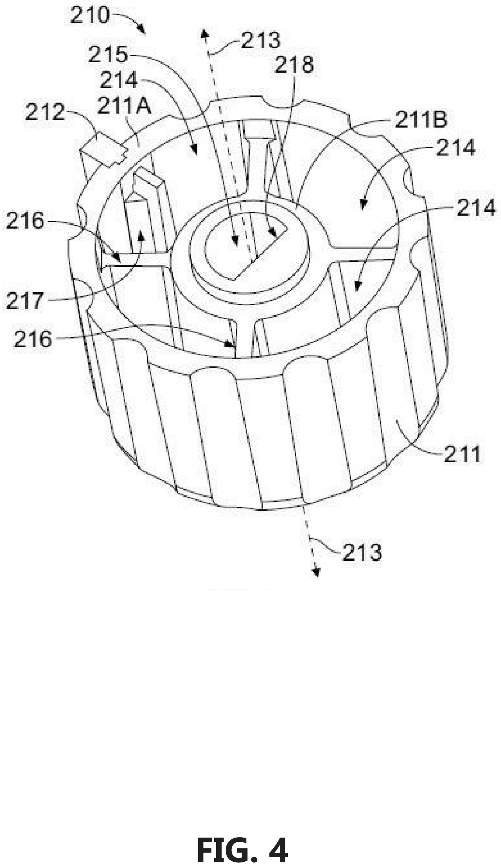

Turning now to FIG. 4, and with reference to FIG. 3, the knob 210 can be seen to extend along the knob axis 213. In some examples, the knob body 211 defines an outer knob receiving area 214 configured to receive, e.g., the detent insert 250 and an inner knob receiving area 215 configured to receive, e.g., the shaft 230. In the example of FIG. 4, the knob body 211 defines the outer knob receiving area 214 between an outer knob body portion 211A of the knob body 211 and an interior knob body portion 211B of the knob body 211, and the knob body 211 defines the inner knob receiving area 215 within the interior knob body portion 211B. In some examples, the knob body 211 does not define any receiving areas, defines only one receiving area, or defines any plurality of receiving areas.

In the embodiment of FIG. 4, the knob body 211 defines a plurality of knob engagement features 216 configured to, e.g., engage the detent tab mount engagement features 246 and/or one or more other portions of the detent tab mount 252, the detent tab 240, and/or a coupling mechanism of the detent insert 250 (e.g., the bow-shaped coupler 253). In some examples, the knob engagement features 216 thereby couple the knob body 211 to the detent tab 240 such that rotation of the knob body 211 about the knob axis 213 causes similar rotation of the detent tab 240 about the knob axis 213 by attaching the knob 210 to the detent tab mount 252 (e.g., by engaging any, some, or all of the detent tab mount engagement features 256) and/or a coupling mechanism of the detent insert 250 (e.g., the bow-shaped coupling mechanism 253) to the knob body 211 and/or by engaging any, some or all of the knob engagement features 216.

In the embodiment of FIG. 4, the knob body 211 defines one or more knob alignment features 217 configured to, e.g., engage the detent tab mount alignment features 257 and/or one or more other portions of the detent tab mount 252, the detent tab 240, and/or an alignment mechanism of the detent insert 250 (e.g., the bow-shaped coupler 253). The one or more knob alignment features 217 are thereby configured to prevent and/or inhibit an unaligned coupling of the knob body 211 with the detent tab 240 and/or the detent insert 250 (e.g., such that the detent tab 240 does not engage one or more of the plurality of detents 224 at one or more correct corresponding input values). In some examples, the indicator 212 of the knob 210 may also function as a knob alignment feature of the one or more knob alignment features 217.

In the embodiment of FIG. 4, the knob body 211 defines one or more knob attachment features 218 configured to, e.g., engage the shaft 230. In some examples, the knob attachment features 218 couple the knob body 211 to the shaft 230 such that rotation of the knob body 211 about the knob axis 213 causes similar rotation of the shaft 230 about the knob axis 213. In some examples, the knob attachment features 218 are configured to prevent and/or inhibit an unaligned coupling of the knob body 211 with the shaft 230 (e.g., such that the indicator 212 does not point to one or more correct corresponding input values).

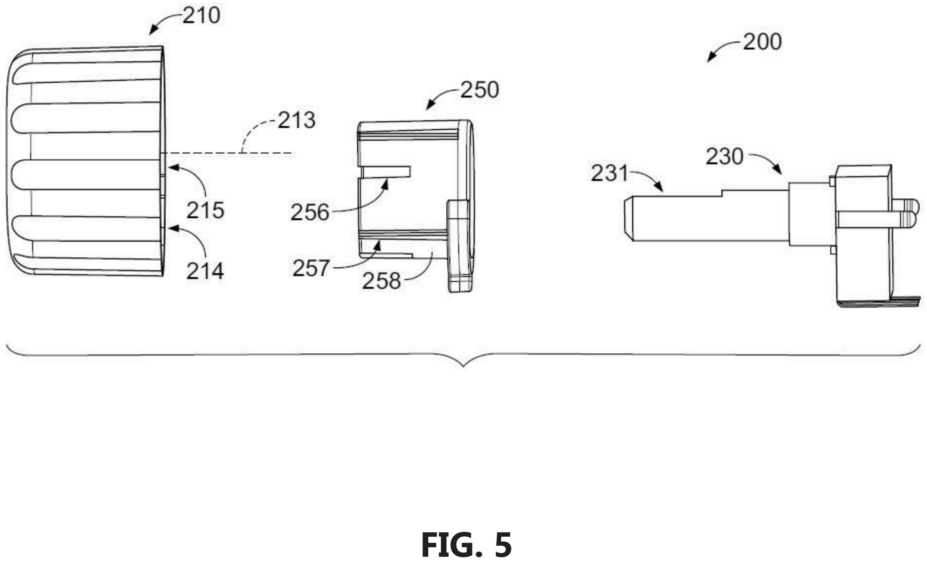

Referring now to FIG. 5, and with reference to FIG. 4, the knob 210, detent insert 250, and shaft 230 are depicted in an uncoupled, exploded view. In some examples, and as can be seen in FIG. 5, the shaft 230 defines a shaft attachment feature 231 (e.g., a flattened lateral edge of a substantially cylindrical shape of the shaft 230 extending substantially parallel to the knob axis 213). configured to, e.g., attach and/or align the shaft 230 with the knob 210 (e.g., by engaging the one or more knob attachment features 218) and/or the detent insert 250 (e.g., by engaging the detent tab mount engagement features 256 and/or the detent tab mount alignment features 257).

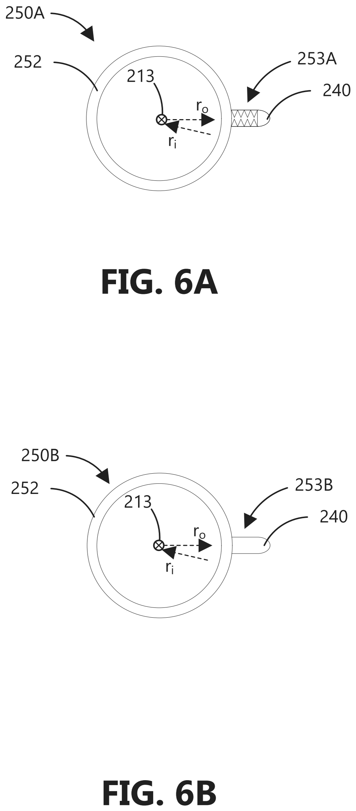

Referring now to FIGS. 6A and 6B, and with reference to FIGS. 3-5, a first alternative detent insert 250A and a second alternative detent insert 250B are depicted. Each of the alternative detent inserts 250A, 250B have an alternative coupling mechanism to the bow-shaped coupler 253 for attaching the detent tab 240 to the detent tab mount 252. For example, the first alternative detent insert 250A includes a compliant spring 253A (e.g., instead of the bow-shaped coupler 253) as a coupling mechanism which, when compressed in the inward radial direction (rᵢ) or stretched in the outward radial direction (rₒ) relative to the knob axis 213, provides a counteracting force biasing the detent tab 240 in the outward radial direction (rₒ) or the inward radial direction (rᵢ), respectively, relative to the knob axis 213. The compliant spring 253A may be, e.g., a mechanical component which, when deformed (e.g., compressed or stretched), generates a force (e.g., having a magnitude based on a degree of deformation) which resists (e.g., based on an elasticity of a material of the compliant spring 253A) the deformation of the compliant spring 253A and/or partially or wholly rectifies, when a deforming force is removed or lessened, the deformation of the compliant spring 253A.

The second alternative detent insert 250B includes a lever 253B (e.g., instead of the bow-shaped coupler 253) as a coupling mechanism which, when compressed in the inward radial direction (rᵢ) or stretched in the outward radial direction (rₒ) relative to the knob axis 213, provides a counteracting force biasing the detent tab 240 in the outward radial direction (rₒ) or the inward radial direction (rᵢ), respectively, relative to the knob axis 213. The lever 253B may be, e.g., a mechanical component formed from an elastic or semi-elastic material which, when deformed (e.g., compressed or stretched), generates a force (e.g., having a magnitude based on a degree of deformation) which resists (e.g., based on an elasticity of a material of the lever 253B) the deformation of the lever 253B and/or partially or wholly rectifies, when a deforming force is removed or lessened, the deformation of the lever 253B.

In some examples, any, some, or all of the coupling mechanisms 253, 253A, 253B and/or one or more coupling mechanisms (e.g., one or more mechanical coupling devices configured to bias the detent tab 240 in the inward radial direction (rᵢ) and/or in the outward radial direction (rₒ) when deformed) couple the detent tab 240 to any, some, or all of the shaft 230, the knob body 211, and/or the detent tab mount 252. In some examples, a plurality of detent tabs are coupled to any, some, or all of the shaft 230, the knob body 211, and/or the detent tab mount 252. In some such examples, each detent tab is coupled the shaft 230, the knob body 211, and/or the detent tab mount 252 by one or more of any, some, or all of the coupling mechanisms 253, 253A, 253B and/or one or more coupling mechanisms.

As used herein, the terms "welding system" and "welding-type system" refer to systems capable of generating and/or conditioning welding power and/or of conducting a welding operation (e.g., by generating, conditioning, and/or receiving welding power). A welding system or welding-type system may operate and/or be capable of operating in only one welding mode and/or in any plurality of welding modes.

As used herein, the terms "torch," "welding torch," "welding tool," and "welding-type tool" can include a hand-held or robotic welding torch, gun, or other device used to create the welding arc.

As used herein, the term "electrode" includes any consumable or non-consumable material which may be controllably provided to a welding torch by welding equipment and which may conduct a weld current (e.g., welding wire).

As used herein, the terms "welding power" and "welding-type power" refer to power suitable for welding, plasma cutting, plasma welding, induction heating, air carbon arc cutting ("CAC-A") and/or hot wire welding/preheating (including laser welding and laser cladding). As used herein, the term "welding-type power supply" refers to any device capable of, when power is applied thereto, supplying welding, plasma cutting, plasma welding, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "welding mode" refers to the type and/or modality of process and/or output used by a welding system, such as gas-metal arc welding ("GMAW") (also referred to as metal inert gas welding ("MIG")), pulsed gas-metal arc welding ("GMAW-P") (also referred to as "pulsed MIG"), current-controlled welding, voltage-controlled welding, enthalpy-controlled welding, power-controlled welding, resistance-controlled welding, pulse welding, tungsten inert gas ("TIG") (also referred to as gas tungsten arc welding ("GTAW")), flux cored arc welding ("FCAW"), shielded metal arc welding ("SMAW") (also referred to as "stick welding"), plasma cutting, plasma welding, spray welding, short circuit transfer welding, pulsed spray welding, and/or one or more other welding modes. As used herein, the term "transfer mode" refers to the mechanism by which an electrode is transferred to a workpiece (e.g., a weld pool on the work piece), and a welding mode may include one or more transfer modes. A transfer mode may include, e.g., short circuit welding, pulse welding, spray welding, pulsed spray welding, Regulated Metal Deposition (i.e., RMD ^{®}), and/or one or more other transfer modes.

As utilized herein the terms "circuits," "circuitry," "controller," and "control circuitry" refer to physical electronic components (i.e., hardware) and any software and/or firmware ("code") which may configure the hardware, be executed by the hardware, and/or otherwise be associated with the hardware. As used herein, for example, a "circuit" may comprise any analog and/or digital components, power and/or control elements (such as a microprocessor, digital signal processor ("DSP"), software, and the like), discrete and/or integrated components, associated software, hardware, and/or firmware, and/or portions and/or combinations thereof. As used herein, for example, a particular processor and memory storage device may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

As used herein, the term "communication circuitry" refers to physical electronic components (i.e., hardware) and, in some examples, any software and/or firmware (i.e., code) which may configure the hardware, be executed by the hardware, and/or otherwise enable the hardware to communicate with one or more other devices (e.g., with communication circuitry of such one or more other devices). Communication circuitry may include hardware capable of wired and/or wireless communication with one or more other devices. Hardware capable of wired communication may include, e.g., one or more cables or other optical communication mechanisms, one or more computer buses, and/or one or more additional wired mechanisms for communicating with one or more communications networks and/or one or more devices. Hardware capable of wireless communications may include, e.g., one or more transceivers, one or more antennas, one or more modems, one or more local area network ("LAN") ports, one or more wireless fidelity ("Wi-Fi") cards, one or more WiMax cards, mobile communications hardware, near-field communication hardware, satellite communication hardware, hardware configured to communicate in accordance with one or more wireless communication protocols (e.g., IrDA, Bluetooth, Wireless USB, Z-Wave, ZigBee, radio frequency identification ("RFID"), one or more other near field communications ("NFC") protocols, and/or one or more other protocols for close-proximity and/or wireless communication), and/or other hardware for wirelessly communicating with one or more communications networks and/or one or more devices. Communication circuitry may include one or more network interfaces, one or more input-output ("I/O") interfaces, and/or one or more other interfaces for communicating data (e.g., directly, via one or more communications paths, etc.) to and/or from one or more communications networks. An example network interface may include hardware, firmware, and/or software to communicatively couple communication circuitry to one or more communications networks. A network interface may include and/or be coupled to one or more communication paths. A communication path includes hardware which provides signal interconnectivity between one or more components (e.g., control circuitry and a transceiver). A network interface may include any hardware for transmitting and/or receiving communications (e.g., IEEE 802.X-compliant wireless and/or wired communications hardware). An example I/O interface includes hardware, firmware, and/or software to connect one or more I/O devices to control circuitry (communicatively coupled to, e.g., communication circuitry comprising the I/O interface) for providing input to the control circuitry and/or providing output from the control circuitry. For example, the I/O interface may include a graphics processing unit for interfacing with a display device, a universal serial bus port for interfacing with one or more USB-compliant devices, a FireWire, a field bus, and/or any other type of interface. Example I/O device(s) may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device. Control circuitry communicatively coupled to an I/O interface may access a non-transitory machine-readable medium via the I/O interface and/or one or more I/O device(s). Examples of a machine-readable medium include optical discs (e.g., compact discs ("CDs"), digital versatile/video discs ("DVDs"), Blu-ray discs, etc.), magnetic media (e.g., floppy disks), portable storage media (e.g., portable flash drives, secure digital ("SD") cards, etc.), and/or any other type of removable and/or installed machine-readable media.

Features described herein make reference to the accompanying drawings in which exemplary embodiments of the disclosure are shown. However, it should be understood that the systems of this disclosure can be embodied in many different forms and should not be construed as limited to the embodiments set forth herein.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

Unless otherwise expressly stated, it is in no way intended than any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z".

As used herein, the word "exemplary" means serving as a non-limiting example, instance, or illustration. The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation. As utilized herein, the terms "e.g." and "for example" set off lists of one or more non-limiting examples, instances, or illustrations.

While the present method, apparatus, and/or system has been described with reference to certain implementations, it will be understood by those skilled in the art that various changes, modifications, and variations may be made to the present disclosure and/or substituted for one or more equivalents without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A welding interface system comprising:
   a selection interface defining a detent and a plurality of selectable angular positions, each selectable angular position of the plurality of selectable angular positions corresponding to a respective input value;
   a knob having a knob axis and a knob body extending from the selection interface along the knob axis, wherein the knob body is configured to rotate about the knob axis to each selectable angular position of the plurality of selectable angular positions; and
   a detent tab extending in a radial direction relative to the knob axis, wherein the detent tab is biased in the radial direction to selectively engage the detent based on a selected angular position of the plurality of selectable angular positions of the knob body.
Clause 2. The welding interface system of clause 1, further comprising a bow-shaped coupling, wherein the bow-shaped coupling couples the detent tab and the knob body.
Clause 3. The welding interface system of clause 2, further comprising a detent tab mount, wherein:
   the bow-shaped coupling extends at least partially about a circumference of the detent tab mount and couples the detent tab to the detent tab mount; and
   the detent tab mount couples the bow-shaped coupling and the knob body.
Clause 4. The welding interface system of clause 3, wherein the bow-shaped coupling comprises a first arm and a second arm, each of the first arm and the second arm comprising a first end coupled to the detent tab and a second end coupled to the detent tab mount.
Clause 5. The welding interface system of clause 4, wherein:
   the first arm extends from the first end of the first arm to the second end of the first arm in a first circumferential direction about the knob axis;
   the second arm extends from the first end of the second arm to the second end of the second arm in a second circumferential direction about the knob axis; and
   the first circumferential direction is opposite the second circumferential direction.
Clause 6. The welding interface system of clause 1, further comprising a coupling mechanism coupling the detent tab and the knob body, wherein the coupling mechanism comprises at least one of a lever or a compliant spring.
Clause 7. The welding interface system of clause 1, further comprising a plurality of detents, wherein:
   the detent is a first detent of the plurality of detents;
   the plurality of selectable angular positions comprises a first angular position and a second angular position;
   the first detent corresponds to the first angular position; and
   the plurality of detents comprises a second detent corresponding to the second angular position.
Clause 8. The welding interface system of clause 1, further comprising a detent insert configured to couple to the knob body and position the detent tab based on rotation of the knob body about the knob axis, wherein:
   the detent insert comprises the detent tab and a detent tab mount coupled to the detent tab;
   one or more knob interior surfaces of the knob body define a knob receiving area; and
   the detent tab mount is configured to be inserted into the knob receiving area and to engage the knob body.
Clause 9. The welding interface system of clause 8, wherein:
   the one or more knob interior surfaces comprise one or more knob engagement features; and
   the detent tab mount comprises one or more detent tab mount engagement features configured to:
      engage at least one of the one or more knob engagement features via the rotation of the knob body about the knob axis; and
      nest with one or more of the one or more knob engagement features when the detent tab mount is inserted into the knob receiving area.
Clause 10. The welding interface system of clause 1, further comprising a detent insert, wherein:
   the knob body is configured to receive a shaft along the knob axis;
   the detent insert comprises the detent tab and a detent tab mount coupled to the detent tab;
   the detent insert is configured to couple to the shaft and position the detent tab based on rotation of the shaft about the knob axis; and
   the detent tab mount is configured to receive the shaft and to engage the shaft via rotation of the shaft.
Clause 11 The welding interface system of clause 1, wherein the knob body and the detent tab are monolithically formed.
Clause 12. A welding system comprising:
   a wire feeder configured to advance an electrode and comprising a welding interface system, wherein the welding interface system comprises:
      a selection interface defining a detent and a plurality of selectable angular positions, each selectable angular position of the plurality of selectable angular positions corresponding to a respective input value;
      a knob body having a knob axis and extending from the selection interface along the knob axis, wherein the knob body is configured to rotate about the knob axis to each selectable angular position of the plurality of selectable angular positions; and
      a detent tab extending in a radial direction relative to the knob axis, wherein the detent tab is biased in the radial direction to selectively engage the detent based on a selected angular position of the plurality of selectable angular positions of the knob body; and
   control circuitry electrically coupled to the welding interface system and configured to:
      determine a target wire feed speed based on a selected input value corresponding to the selected angular position; and
      control the wire feeder to advance the electrode according to the target wire feed speed.
Clause 13. The welding system of clause 12, wherein the respective input value corresponding to each selectable angular position of the plurality of selectable angular positions corresponds to at least one of:
   an operating mode input; or
   one or more respective wire feed speed inputs.
Clause 14. The welding system of clause 12, wherein the welding interface system further comprises a bow-shaped coupling, wherein the bow-shaped coupling couples the detent tab and the knob body.
Clause 15. The welding system of clause 12, wherein the welding interface system further comprises a compliant spring, wherein the compliant spring couples the detent tab and the knob body.
Clause 16. A welding system comprising:
   power conversion circuitry configured to convert input power to welding power and to output the welding power to an electrode, wherein the power conversion circuitry comprises a welding interface system comprising:
      a selection interface defining a detent and a plurality of selectable angular positions, each selectable angular position of the plurality of selectable angular positions corresponding to a respective input value;
      a knob having a knob axis and a knob body extending from the selection interface along the knob axis, wherein the knob body is configured to rotate about the knob axis to each selectable angular position of the plurality of selectable angular positions; and
      a detent tab extending in a radial direction relative to the knob axis, wherein the detent tab is biased in the radial direction to selectively engage the detent based on a selected angular position of the plurality of selectable angular positions of the knob body; and
   control circuitry electrically coupled to the welding interface system and configured to:
      determine one or more target welding parameters based on a selected input value corresponding to the selected angular position; and
      control the power conversion circuitry to output the welding power according to the one or more target welding parameters.
Clause 17. The welding system of clause 16, wherein the respective input value corresponding to each selectable angular position of the plurality of selectable angular positions corresponds to at least one of a respective welding parameter input.
Clause 18. The welding system of clause 17, wherein the respective welding parameter input corresponding to each selectable angular position of the plurality of selectable angular positions comprises at least one of:
   a voltage input;
   a current input;
   a power input;
   a resistance input;
   an enthalpy input;
   a wire feed speed input;
   a gas flow rate input;
   a pulse rate input;
   an arc length input;
   a welding process input;
   a welding mode input; or
   an operating mode input.
Clause 19. The welding system of clause 16, wherein the welding interface system further comprises a bow-shaped coupling, wherein the bow-shaped coupling couples the detent tab and the knob body.
Clause 20. The welding system of clause 16, wherein the welding interface system further comprises a compliant spring, wherein the compliant spring couples the detent tab and the knob body.

## Claims

1. A welding interface system comprising:
a selection interface defining a detent and a plurality of selectable angular positions, each selectable angular position of the plurality of selectable angular positions corresponding to a respective input value;
a knob having a knob axis and a knob body extending from the selection interface along the knob axis, wherein the knob body is configured to rotate about the knob axis to each selectable angular position of the plurality of selectable angular positions; and
a detent tab extending in a radial direction relative to the knob axis, wherein the detent tab is biased in the radial direction to selectively engage the detent based on a selected angular position of the plurality of selectable angular positions of the knob body.

2. The welding interface system of claim 1, further comprising a bow-shaped coupling, wherein the bow-shaped coupling couples the detent tab and the knob body.

3. The welding interface system of claim 2, further comprising a detent tab mount, wherein:
the bow-shaped coupling extends at least partially about a circumference of the detent tab mount and couples the detent tab to the detent tab mount; and
the detent tab mount couples the bow-shaped coupling and the knob body.

4. The welding interface system of claim 3, wherein the bow-shaped coupling comprises a first arm and a second arm, each of the first arm and the second arm comprising a first end coupled to the detent tab and a second end coupled to the detent tab mount.

5. The welding interface system of claim 4, wherein:
the first arm extends from the first end of the first arm to the second end of the first arm in a first circumferential direction about the knob axis;
the second arm extends from the first end of the second arm to the second end of the second arm in a second circumferential direction about the knob axis; and
the first circumferential direction is opposite the second circumferential direction.

6. The welding interface system of claim 1, further comprising a coupling mechanism coupling the detent tab and the knob body, wherein the coupling mechanism comprises at least one of a lever or a compliant spring.

7. The welding interface system of claim 1, further comprising a plurality of detents, wherein:
the detent is a first detent of the plurality of detents;
the plurality of selectable angular positions comprises a first angular position and a second angular position;
the first detent corresponds to the first angular position; and
the plurality of detents comprises a second detent corresponding to the second angular position.

8. The welding interface system of claim 1, further comprising a detent insert configured to couple to the knob body and position the detent tab based on rotation of the knob body about the knob axis, wherein:
the detent insert comprises the detent tab and a detent tab mount coupled to the detent tab;
one or more knob interior surfaces of the knob body define a knob receiving area; and
the detent tab mount is configured to be inserted into the knob receiving area and to engage the knob body and optionally
wherein:
the one or more knob interior surfaces comprise one or more knob engagement features; and
the detent tab mount comprises one or more detent tab mount engagement features configured to:
engage at least one of the one or more knob engagement features via the rotation of the knob body about the knob axis; and
nest with one or more of the one or more knob engagement features when the detent tab mount is inserted into the knob receiving area.

9. The welding interface system of claim 1, further comprising a detent insert, wherein:
the knob body is configured to receive a shaft along the knob axis;
the detent insert comprises the detent tab and a detent tab mount coupled to the detent tab;
the detent insert is configured to couple to the shaft and position the detent tab based on rotation of the shaft about the knob axis; and
the detent tab mount is configured to receive the shaft and to engage the shaft via rotation of the shaft.

10. The welding interface system of claim 1, wherein the knob body and the detent tab are monolithically formed.

11. A welding system comprising:
a wire feeder configured to advance an electrode and comprising a welding interface system, wherein the welding interface system comprises:
a selection interface defining a detent and a plurality of selectable angular positions, each selectable angular position of the plurality of selectable angular positions corresponding to a respective input value;
a knob body having a knob axis and extending from the selection interface along the knob axis, wherein the knob body is configured to rotate about the knob axis to each selectable angular position of the plurality of selectable angular positions; and
a detent tab extending in a radial direction relative to the knob axis, wherein the detent tab is biased in the radial direction to selectively engage the detent based on a selected angular position of the plurality of selectable angular positions of the knob body; and
control circuitry electrically coupled to the welding interface system and configured to:
determine a target wire feed speed based on a selected input value corresponding to the selected angular position; and
control the wire feeder to advance the electrode according to the target wire feed speed.

12. The welding system of claim 11, wherein the respective input value corresponding to each selectable angular position of the plurality of selectable angular positions corresponds to at least one of:
an operating mode input; or
one or more respective wire feed speed inputs, or
wherein the welding interface system further comprises a bow-shaped coupling, wherein the bow-shaped coupling couples the detent tab and the knob body or wherein the welding interface system further comprises a compliant spring, wherein the compliant spring couples the detent tab and the knob body.

13. A welding system comprising:
power conversion circuitry configured to convert input power to welding power and to output the welding power to an electrode, wherein the power conversion circuitry comprises a welding interface system comprising:
a selection interface defining a detent and a plurality of selectable angular positions, each selectable angular position of the plurality of selectable angular positions corresponding to a respective input value;
a knob having a knob axis and a knob body extending from the selection interface along the knob axis, wherein the knob body is configured to rotate about the knob axis to each selectable angular position of the plurality of selectable angular positions; and
a detent tab extending in a radial direction relative to the knob axis, wherein the detent tab is biased in the radial direction to selectively engage the detent based on a selected angular position of the plurality of selectable angular positions of the knob body; and
control circuitry electrically coupled to the welding interface system and configured to:
determine one or more target welding parameters based on a selected input value corresponding to the selected angular position; and
control the power conversion circuitry to output the welding power according to the one or more target welding parameters.

14. The welding system of claim 13, wherein the respective input value corresponding to each selectable angular position of the plurality of selectable angular positions corresponds to at least one of a respective welding parameter input and optionally wherein the respective welding parameter input corresponding to each selectable angular position of the plurality of selectable angular positions comprises at least one of:
a voltage input;
a current input;
a power input;
a resistance input;
an enthalpy input;
a wire feed speed input;
a gas flow rate input;
a pulse rate input;
an arc length input;
a welding process input;
a welding mode input; or
an operating mode input.

15. The welding system of claim 13, wherein the welding interface system further comprises a bow-shaped coupling, wherein the bow-shaped coupling couples the detent tab and the knob body or wherein the welding interface system further comprises a compliant spring, wherein the compliant spring couples the detent tab and the knob body.
